(19) Europäisches Patentamt
European Patent Office
Office européen des brevets

(11) **EP 1 355 531 B1**

(12) **EUROPÄISCHE PATENTSCHRIFT**

(45) Veröffentlichungstag und Bekanntmachung des Hinweises auf die Patenterteilung:
**21.12.2005 Patentblatt 2005/51**

(21) Anmeldenummer: **02702285.4**

(22) Anmeldetag: **19.01.2002**

(51) Int Cl.[7]: **A01N 47/12**, A01N 43/90, A01N 43/50 // (A01N47/12, 43:90), A01N43:50

(86) Internationale Anmeldenummer:
**PCT/EP2002/000497**

(87) Internationale Veröffentlichungsnummer:
**WO 2002/056690 (25.07.2002 Gazette 2002/30)**

(54) **FUNGIZIDE MISCHUNGEN**

FUNGICIDE MIXTURES

MELANGES FONGICIDES

(84) Benannte Vertragsstaaten:
**AT BE CH CY DE DK ES FI FR GB GR IE IT LI LU MC NL PT SE TR**
Benannte Erstreckungsstaaten:
**LT LV RO SI**

(30) Priorität: **22.01.2001 DE 10102835**

(43) Veröffentlichungstag der Anmeldung:
**29.10.2003 Patentblatt 2003/44**

(73) Patentinhaber: **BASF Aktiengesellschaft**
**67056 Ludwigshafen (DE)**

(72) Erfinder:
- **PTOCK, Arne**
  **67065 Ludwigshafen (DE)**
- **AMMERMANN, Eberhard**
  **64646 Heppenheim (DE)**
- **STIERL, Reinhard**
  **67251 Freinsheim (DE)**
- **LORENZ, Gisela**
  **67434 Hambach (DE)**
- **STRATHMANN, Siegfried**
  **67117 Limburgerhof (DE)**
- **SCHERER, Maria**
  **76829 Landau (DE)**
- **SCHELBERGER, Klaus**
  **67161 Gönnheim (DE)**
- **REDDIG, Achim**
  **21047 Saronno (IT)**

(56) Entgegenhaltungen:
**EP-A- 0 298 196**
**EP-A- 0 398 072**
**EP-A- 0 610 764**
**EP-A- 0 630 570**
**WO-A-01/05231**
**WO-A-97/06171**
**WO-A-98/47370**
**WO-A-99/56551**
**DE-A- 4 321 897**
**DE-A- 19 531 814**
**DE-A- 19 904 081**
**JP-A- 9 323 984**
**US-B1- 6 297 236**

EP 1 355 531 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

## Beschreibung

Die vorliegende Erfindung betrifft fungizide Mischungen, enthaltend

A) Das Imidazolderivat der Formel Ia

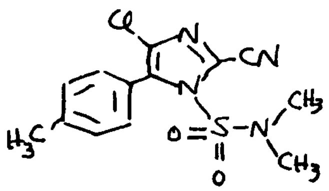

Ia

B) Valinamide der Formel II,

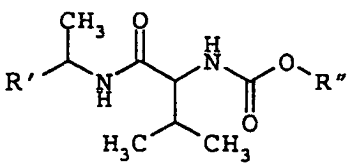

II

in der

R' Phenyl, welches in 4-Stellung durch Halogen oder $C_1$-$C_4$-Alkyl oder $C_1$-$C_4$-Alkoxy substituiert ist, 1- oder 2-Naphthyl, oder Benzthiazol-2-yl, welches in 6-Stellung durch Halogen substituiert ist; und

R" $C_3$-$C_4$-Alkyl bedeuten;

in einer synergistisch wirksamen Menge.

Außerdem betrifft die Erfindung Verfahren zur Bekämpfung von Schadpilzen mit Mischungen der Verbindungen Ia und II und die Verwendung der Verbindung Ia und der Verbindungen II zur Herstellung derartiger Mischungen.

Das Imidazolderivat der Formel Ia, ihre Herstellung und ihre Wirkung gegen Schadpilze sind aus der Literatur bekannt (EP-A 298 196, WO-A 97/06171).

Die Valinamide der Formel II sowie Verfahren zu deren Herstellung sind in EP-A-0 398 072, EP-A-0 610 764, DE-A-43 21 897, WO-A-96/07638 und JP-A 09/323984 beschrieben. Außerdem können sie analog den in der DE 1 95 31 814 beschriebenen Verfahren hergestellt werden.

Synergistische fungizide Wirkstoffkombinationen aus Valinamid-Derivaten sind aus DE-A-19904081 bekannt.

Im Hinblick auf eine Senkung der Aufwandmengen und eine Verbesserung des Wirkungsspektrums der bekannten Verbindungen Ia und II lagen der vorliegenden Erfindung Mischungen als Aufgabe zugrunde, die bei verringerter Gesamtmenge an ausgebrachten Wirkstoffen eine verbesserte Wirkung gegen Schadpilzen aufweisen (synergistische Mischungen).

Demgemäß wurde die eingangs definierte Mischung gefunden. Es wurde außerdem gefunden, daß sich bei gleichzeitiger, und zwar gemeinsamer oder getrennter Anwendung der Verbindung Ia und der Verbindungen II oder bei Anwendung der Verbindung Ia und der Verbindungen II nacheinander Schadpilze besser bekämpfen lassen, als mit den Einzelverbindungen allein.

Die Verbindung der Formel Ia (common name: cyazofamid) ist aus EP-A 298 196 bekannt.

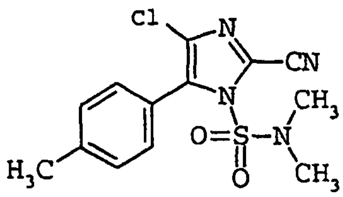

Ia

Bevorzugt sind Verbindungen der Formel II', die im Aminosäureteil S-Konfiguration aufweisen. Diese Verbindungen entsprechen der Formel II':

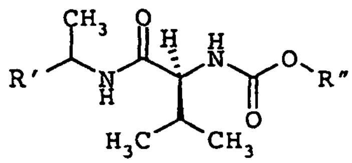

II'

Gemäß einer weiteren bevorzugten Ausführungsform werden Verbindungen der Formel II' verwendet, wobei das der Gruppe R' benachbarte C-Atom R-konfiguriert ist. Diese Verbindungen entsprechen der Formel II":

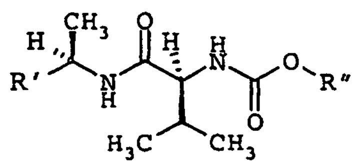

II"

Die Formeln II' und II" repräsentieren insbesondere Valinamide der Formeln IIa und IIb, in denen die Substituenten einer Zeile der folgenden Tabelle entspricht:

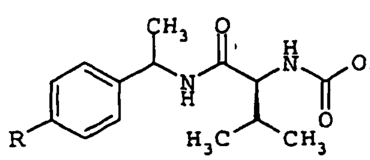

IIa

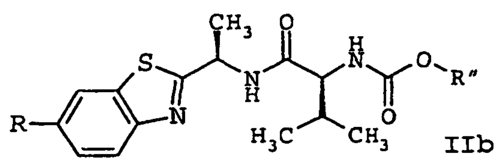

IIb

| Nr. | Formel | R | R" |
|---|---|---|---|
| II-1 | IIa | Br | $CH(CH_3)_2$ |
| II-2 | IIa | Cl | $CH(CH_3)_2$ |
| II-3 | IIa | $CH_3$ | $CH(CH_3)_2$ |
| II-4 | IIa | $OCH_3$ | $CH(CH_3)_2$ |
| II-5 | IIa | Br | $CH\ (CH_3')\ CH_2CH_3$ |
| II-6 | IIa | Cl | $CH\ (CH_3)\ CH_2CH_3$ |
| II-7 | IIa | $CH_3$ | $CH\ (CH_3)\ CH_2CH_3$ |
| II-8 | IIa | $OCH_3$ | $CH(CH_3)CH_2CH_3$ |
| II-9 | IIb | F | $CH(CH_3)_2$ |

(fortgesetzt)

| Nr. | Formel | R | R" |
|---|---|---|---|
| II-10 | IIb | Cl | $CH(CH_3)_2$ |
| II-11 | IIb | Br | $CH(CH_3)_2$ |
| II-12 | IIb | F | $CH(CH_3)CH_2CH_3$ |
| II-13 | IIb | Cl | $CH (CH_3) CH_2CH_3$ |
| II-14 | IIb | Br | $CH(CH_3)CH_2CH_3$ |

Besonders bevorzugt sind Verbindungen II-3, II-9 und Verbindung II-15:

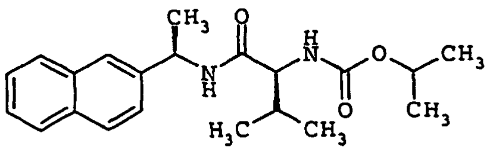

II-15

Bevorzugt ist für die Verbindungen II-1 bis II-15 die Konfiguration gemäß Formel II'.

Besonders bevorzugt sind Mischungen der Verbindungen der Formel Ia, die als zweite Komponente II-3 (common name: Iprovalicarb), II-9 oder II-15 enthalten.

Bevorzugt setzt man bei der Bereitstellung der Mischungen die reinen Wirkstoffe Ia und II ein, denen man weitere Wirkstoffe gegen Schadpilze oder gegen andere Schädlinge wie Insekten, Spinntiere oder Nematoden oder auch herbizide oder wachstumsregulierende Wirkstoffe oder Düngemittel beimischen kann.

Die Mischungen aus den Verbindungen Ia und II bzw. die Verbindungen Ia und II gleichzeitig, gemeinsam oder getrennt angewandt, zeichnen sich durch eine hervorragende Wirkung gegen ein breites Spektrum von pflanzenpathogenen Pilzen, insbesondere aus der Klasse der Ascomyceten, Basidiomyceten, Phycomyceten und Deuteromyceten aus. Sie sind z.T. systemisch wirksam und können daher auch als Blatt- und Bodenfungizide eingesetzt werden.

Besondere Bedeutung haben sie für die Bekämpfung einer Vielzahl von Pilzen an verschiedenen Kulturpflanzen wie Baumwolle, Gemüsepflanzen (z.B. Gurken, Bohnen, Tomaten, Kartoffeln und Kürbisgewächse), Gerste, Gras, Hafer, Bananen, Kaffee, Mais, Obstpflanzen, Reis, Roggen, Soja, Wein, Weizen, Zierpflanzen, Zuckerrohr sowie an einer Vielzahl von Samen.

Insbesondere eignen sie sich zur Bekämpfung der folgenden pflanzenpathogenen Pilze: Erysiphe graminis (echter Mehltau) an Getreide, Erysiphe cichoracearum und Sphaerotheca fuliginea an Kürbisgewächsen, Podosphaera leucotricha an Äpfeln, Uncinula necator an Reben, Puccinia-Arten an Getreide, Rhizoctonia-Arten an Baumwolle, Reis und Rasen, Ustilago-Arten an Getreide und Zukkerrohr, Venturia inaequalis (Schorf) an Äpfeln, Helminthosporium-Arten an Getreide, Septoria nodorum an Weizen, Botrytis cinera (Grauschimmel) an Erdbeeren, Gemüse, Zierpflanzen und Reben, Cercospora arachidicola an Erdnüssen, Pseudocercosporella herpotrichoides an Weizen und Gerste, Pyricularia oryzae an Reis, Phytophthora infestans an Kartoffeln und Tomaten, Plasmopara viticola an Reben, Pseudoperonospora-Arten in Hopfen und Gurken, Alternaria-Arten an Gemüse und Obst, Mycosphaerella-Arten in Bananen sowie Fusarium- und Verticillium-Arten.

Sie sind außerdem im Materialschutz (z.B. Holzschutz) anwendbar, beispielsweise gegen Paecilomyces variotii.

Die Verbindungen Ia und II können gleichzeitig, und zwar gemeinsam oder getrennt, oder nacheinander aufgebracht werden, wobei die Reihenfolge bei getrennter Applikation im allgemeinen keine Auswirkung auf den Bekämpfungserfolg hat.

Die Verbindungen Ia und II werden üblicherweise in einem Gewichtsverhältnis von 20:1 bis 1:20, insbesondere 10:1 bis 1:10, vorzugsweise 5:1 bis 1:5 angewendet.

Die Aufwandmengen der erfindungsgemäßen Mischungen liegen, vor allem bei landwirtschaftlichen Kulturflächen, je nach Art des gewünschten Effekts bei 0,01 bis 8 kg/ha, vorzugsweise 0,1 bis 5 kg/ha, insbesondere 0,1 bis 3,0 kg/ha.

Die Aufwandmengen liegen dabei für die Verbindungen Ia bei 0,01 bis 2,5kg/ha, beispielweise bei 0,01 bis 1 kg/ha, vorzugsweise 0,05 bis 0,5 kg/ha, insbesondere 0,05 bis 0,3 kg/ha.

Die Aufwandmengen für die Verbindungen II liegen entsprechend bei 0,01 bis 10 kg/ha beispielweise bei 0,01 bis 1 kg/ha, vorzugsweise 0,02 bis 0,5 kg/ha, insbesondere 0,05 bis 0,3 kg/ha.

Bei der Saatgutbehandlung werden im allgemeinen Aufwandmengen an Mischung von 0,001 bis 250 g/kg Saatgut, vorzugsweise 0,01 bis 100 g/kg, insbesondere 0,01 bis 50 g/kg verwendet.

Sofern für Pflanzen pathogene Schadpilze zu bekämpfen sind, erfolgt die getrennte oder gemeinsame Applikation der Verbindungen Ia und II oder der Mischungen aus den Verbindungen Ia und II durch Besprühen oder Bestäuben der Samen, der Pflanzen oder der Böden vor oder nach der Aussaat der Pflanzen oder vor oder nach dem Auflaufen der Pflanzen.

Die erfindungsgemäßen fungiziden synergistischen Mischungen bzw. die Verbindungen Ia und II können beispielsweise in Form von direkt versprühbaren Lösungen, Pulver und Suspensionen oder in Form von hochprozentigen wäßrigen, Öligen oder sonstigen Suspensionen, Dispersionen, Emulsionen, Öldispersionen, Pasten, Stäubemitteln, Streumitteln oder Granulaten aufbereitet und durch Versprühen, Vernebeln, Verstäuben, Verstreuen oder Gießen angewendet werden. Die Anwendungsform ist abhängig vom Verwendungszweck; sie soll in jedem Fall eine möglichst feine und gleichmäßige Verteilung der erfindungsgemäßen Mischung gewährleisten.

Des erfindungsgemäße fungizide Mittel ist vorzugsweise in zwei Teile konditioniert, wobei der eine Teil ein Imidazolderivat der Formel Ia in einem festen oder flüssigen Träger enthält und der andere Teil Valinamide der Formel II in einem festen oder flüssigen Träger enthält.

Die Formulierungen werden in an sich bekannter Weise hergestellt, z.B. durch Zugabe von Lösungsmitteln und/oder Trägerstoffen. Den Formulierungen werden üblicherweise inerte Zusatzstoffe wie Emulgiermittel oder Dispergiermittel beigemischt.

Als oberflächenaktive Stoffe kommen die Alkali-, Erdalkali-, Ammoniumsalze von aromatischen Sulfonsäuren, z.B. Lignin-, Phenol-, Naphthalin- und Dibutylnaphthalinsulfonsäure, sowie von Fettsäuren, Alkyl- und Alkylarylsulfonaten, Alkyl-, Laurylether- und Fettalkoholsulfaten, sowie Salze sulfatierter Hexa-, Hepta- und Octadecanole oder Fettalkoholglycolethern, Kondensationsprodukte von sulfoniertem Naphthalin und seinen Derivaten mit Formaldehyd, Kondensationsprodukte des Naphthalins bzw. der Naphthalinsulfonsäuren mit Phenol und Formaldehyd, Polyoxyethylenoctylphenolether, ethoxyliertes Isooctyl-, Octyl- oder Nonylphenol, Alkylphenol- oder Tributylphenylpolyglycolether, Alkylarylpolyetheralkohole, Isotridecylalkohol, Fettalkoholethylenoxid- Kondensate, ethoxyliertes Rizinusöl, Polyoxyethylenalkylether oder Polyoxypropylen, Laurylalkoholpolyglycoletheracetat, Sorbitester, Lignin-Sulfitablaugen oder Methylcellulose in Betracht.

Pulver Streu- und Stäubemittel können durch Mischen oder gemeinsames Vermahlen der Verbindungen Ia oder II oder der Mischung aus den Verbindungen Ia und II mit einem festen Trägerstoff hergestellt werden.

Granulate (z.B. Umhüllungs-, Imprägnierungs- oder Homogengranulate) werden üblicherweise durch Bindung des Wirkstoffs oder der Wirkstoffe an einen festen Trägerstoff hergestellt.

Als Füllstoffe bzw. feste Trägerstoffe dienen beispielsweise Mineralerden wie Silicagel, Kieselsäuren, Kieselgele, Silikate, Talkum, Kaolin, Kalkstein, Kalk, Kreide, Bolus, Löß, Ton, Dolomit, Diatomeenerde, Calcium- und Magnesiumsulfat, Magnesiumoxid, gemahlene Kunststoffe, sowie Düngemittel wie Ammoniumsulfat, Ammoniumphosphat, Ammoniumnitrat, Harnstoffe und pflanzliche Produkte wie Getreidemehl, Baumrinden-, Holz- und Nußschalenmehl, Cellulosepulver oder andere feste Trägerstoffe.

Die Formulierungen enthalten im allgemeinen 0,1 bis 95 Gew.-%, vorzugsweise 0,5 bis 90 Gew.-% einer der Verbindungen Ia oder II bzw. der Mischung aus den Verbindungen I und II. Die Wirkstoffe werden dabei in einer Reinheit von 90% bis 100%, vorzugsweise 95% bis 100% (nach NMR- oder HPLC-Spektrum) eingesetzt.

Die Anwendung der Verbindungen Ia und II, der Mischungen oder der entsprechenden Formulierungen erfolgt so, daß man die Schadpilze, deren Lebensraum oder die von ihnen freizuhaltenden Pflanzen, Samen, Böden, Flächen, Materialien oder Räume mit einer fungizid wirksamen Menge der Mischung, bzw. der Verbindungen I und II bei getrennter Ausbringung, behandelt.

Die Anwendung kann vor oder nach dem Befall durch die Schadpilze erfolgen.

Anwendungsbeispiel

Die synergistische Wirkung der erfindungsgemäßen Mischungen ließ sich durch die folgenden Versuche zeigen:

Die Wirkstoffe wurden getrennt oder gemeinsam als 10%ige Emulsion in einem Gemisch aus 63 Gew.-% Cyclohexanon und 27 Gew.-% Emulgator aufbereitet und entsprechend der gewünschten Konzentration mit Wasser verdünnt.

Die Auswertung erfolgte durch Feststellung der befallenen Blattflächen in Prozent. Diese Prozent-Werte wurden in Wirkungsgrade umgerechnet. Der Wirkungsgrad (**W**) wurde nach der Formel von Abbot wie folgt bestimmt:

$$W = (100-\alpha)\cdot 100/\beta$$

$\alpha$ entspricht dem Pilzbefall der behandelten Pflanzen in % und
$\beta$ entspricht dem Pilzbefall der unbehandelten (Kontroll-) Pflanzen in %

Bei einem Wirkungsgrad von 0 entspricht der Befall der behandelten Pflanzen demjenigen der unbehandelten Kontrollpflanzen; bei einem Wirkungsgrad von 100 wiesen die behandelten Pflanzen keinen Befall auf.

Die zu erwartenden Wirkungsgrade der Wirkstoffmischungen wurden nach der Colby Formel [R.S. Colby, Weeds 15, 20-22 (1967)] ermittelt und mit den beobachteten Wirkungsgraden verglichen.

$$\text{Colby Formel: } E = x + y - x\cdot y/100$$

E zu erwartender Wirkungsgrad, ausgedrückt in % der unbehandelten Kontrolle, beim Einsatz der Mischung aus den Wirkstoffen A und B in den Konzentrationen a und b
x der Wirkungsgrad, ausgedrückt in % der unbehandelten Kontrolle, beim Einsatz des Wirkstoffs A in der Konzentration a
y der Wirkungsgrad, ausgedrückt in % der unbehandelten Kontrolle, beim Einsatz des Wirkstoffs B in der Konzentration b

Anwendungsbeispiel: Protektive Wirksamkeit gegen die Krautfäule an Tomaten verursacht durch *Phytophthora infestans*

Blätter von Topfpflanzen der Sorte "Große Fleischtomate St. Pierre" wurden mit einer wäßrigen Suspension, die aus einer Stammlösung bestehend aus 10 % Wirkstoff, 85 % Cyclohexanon und 5 % Emulgiermittel angesetzt wurde, bis zur Tropfnässe besprüht. Am folgenden Tag wurden die Blätter mit einer kalten wäßrigen Zoosporenaufschwemmung von *Phytophthora infestans* mit einer Dichte von 0.25 x $10^6$ Sporen/ml infiziert. Anschließend wurden die Pflanzen in einer wasserdampfgesättigten Kammer bei Temperaturen zwischen 18 und 20°C aufgestellt. Nach 6 Tagen hatte sich die Krautfäule auf den unbehandelten, jedoch infizierten Kontrollpflanzen so stark entwickelt, daß der Befall visuell in % ermittelt werden konnte.

Tabelle A -

| Einzelwirkstoffe | | | |
|---|---|---|---|
| Beispiel | Wirkstoff | Wirkstoffkonzentration in der Spritzbrühe [ppm] | Wirkungsgrad in % der unbehandelten Kontrolle |
| 1 | Kontrolle (unbehandelt) | (85 % Befall) | 0 |
| 2 | Ia | 0,2 | 82 |
| | | 0,1 | 70 |
| | | 0,05 | 53 |
| 3 | II-3 | 0,2 | 70 |
| | | 0,1 | 53 |
| | | 0,05 | 29 |
| 4 | II-9 | 0,1 | 82 |
| | | 0,05 | 70 |

Tabelle B -

| erfindungsgemäße Kombinationen | | | |
|---|---|---|---|
| Beispiel | Wirkstoffmischung beobachteter Konzentration Wirkungsgrad Mischungsverhältnis | | berechneter Wirkungsgrad*) |
| 5 | Ia + II-3 0,1 + 0,1 ppm 1 : 1 | 100 | 86 |
| 6 | Ia + II-3 0,05 + 0,05 ppm 1 : 1 | 100 | 66 |
| 7 | Ia + II-3 0,1 + 0,05 ppm 2 : 1 | 100 | 79 |
| 8 | Ia + II-3 0,2 + 0,05 ppm 4 : 1 | 100 | 87 |
| 9 | Ia + II-3 0,05 + 0,1 ppm 1 : 2 | 100 | 78 |
| 10 | Ia + II-3 0,05 + 0,2 ppm 1 : 4 | 100 | 86 |
| 11 | Ia + II-9 0,05 + 0,05 ppm 1 : 1 | 100 | 86 |
| 12 | Ia + II-9 0,1 + 0,05 ppm 2 : 1 | 100 | 91 |
| 13 | Ia + II-9 0,05 + 0,1 ppm 1 : 2 | 100 | 92 |

*) berechnet nach der Colby-Formel

Aus den Ergebnissen der Versuche geht hervor, daß der beobachtete Wirkungsgrad in allen Mischungsverhältnissen höher ist, als nach der Colby-Formel vorausberechnet.

**Patentansprüche**

**1.** Fungizide Mischungen, enthaltend

A) das Imidazolderivat der Formel Ia

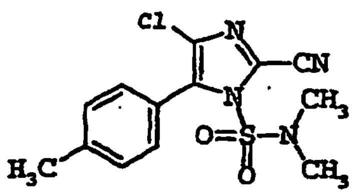

Ia

und

B) Valinamide der Formel II,

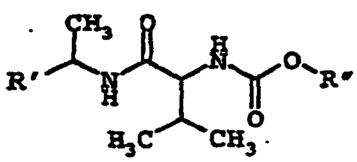

II

in der

R' Phenyl, welches in 4-Stellung durch Halogen oder $C_1$-$C_4$-Alkyl oder $C_1$-$C_4$-Alkoxy substituiert ist, 1- oder 2-Naphthyl, oder Benzthiazol-2-yl, welches in 6-Stellung durch Halogen substituiert ist; und

R'' $C_3$-$C_4$-Alkyl bedeuten;

in einer synergistisch wirksamen Menge.

2. Fungizide Mischung nach Anspruch 1, **dadurch gekennzeichnet, daß** das Gewichtsverhältnis des Imidazolderivates Ia zu den Valinamiden II 20:1 bis 1:20 beträgt.

3. Verfahren zur Bekämpfung von Schadpilzen, **dadurch gekennzeichnet, daß** man die Schadpilze, deren Lebensraum oder die von ihnen freizuhaltenden Pflanzen, Samen, Böden, Flächen, Materialien oder Räume mit einem Imidazolderivat der Formel Ia gemäß Anspruch 1 und Valinamiden der Formel II gemäß Anspruch 1 behandelt.

4. Verfahren nach Anspruch 3, **dadurch gekennzeichnet, daß** man das Imidazolderivat der Formel Ia gemäß Anspruch 1 und Valinamide der Formel II gemäß Anspruch 1 gleichzeitig, und zwar gemeinsam oder getrennt, oder nacheinander ausbringt.

5. Verfahren nach Anspruch 3 oder 4, **dadurch gekennzeichnet, daß** man das Imidazolderivat der Formel Ia gemäß Anspruch 1 in einer Menge von 0,01 bis 2, 5 kg/ha aufwendet.

6. Verfahren nach den Ansprüchen 3 bis 5, **dadurch gekennzeichnet, daß** man die Valinamide der Formel II gemäß Anspruch 1 in einer Menge von 0,01 bis 10 kg/ha aufwendet.

7. Fungizides Mittel, das in zwei Teilen konditioniert ist, wobei der eine Teil ein imidazolderivat der Formel Ia gemäß Anspruch 1 in einem festen oder flüssigen Träger enthält und der andere Teil Valinamide der Formel II gemäß Anspruch 1 in einem festen oder flüssigen Träger enthält.

## Claims

1. A fungicidal mixture, comprising

A) the imidazole derivative of the formula Ia

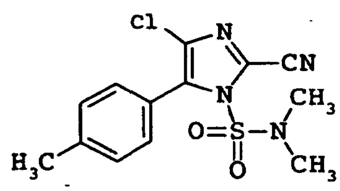

Ia

and

B) valinamides of the formula II,

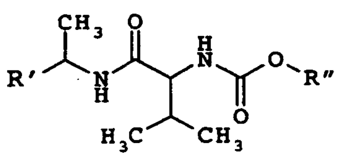

II

in which

R' is phenyl, which is substituted in the 4-position by halogen or $C_1$-$C_4$-alkyl or $C_1$-$C_4$-alkoxy, is 1- or 2-naphthyl, or is benzothiazol-2-yl, which is substituted in the 6-position by halogen; and

R" is $C_3$-$C_4$-alkyl;

in a synergistically effective amount.

2. The fungicidal mixture according to claim 1, wherein the weight ratio of the imidazole derivative Ia to the valinamides II is from 20:1 to 1:20.

3. A method for controlling harmful fungi, which comprises treating the harmful fungi, their habitat or the plants, seeds, soils, areas, materials or spaces to be kept free from them with an imidazole derivative of the formula Ia as set forth in claim 1 and valinamides of the formula II as set forth in claim 1.

4. The method according to claim 3, wherein the imidazole derivative of the formula Ia as set forth in claim 1 and valinamides of the formula II as set forth in claim 1 are applied simultaneously, that is either together or separately, or successively.

5. The method according to claim 3 or 4, wherein the imidazole derivative of the formula Ia as set forth in claim 1 is applied in an amount of from 0.01 to 2.5 kg/ha.

6. The method according to any of claims 3 to 5, wherein the valinamides of the formula II as set forth in claim 1 are applied in an amount of from 0.01 to 10 kg/ha.

7. The fungicidal composition, which is conditioned in two parts, one part comprising an imidazole derivative of the formula Ia as set forth in claim 1 in a solid or liquid carrier and the other part comprising valinamides of the formula II as set forth in claim 1 in a solid or liquid carrier.

## Revendications

1. Mélanges fongicides qui contiennent :

A) le dérivé d'imidazole de formule Ia

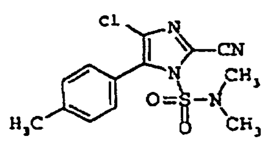

Ia

et

B) des valinamides de formule II

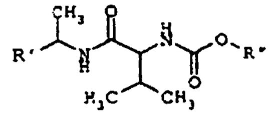

II

dans laquelle
R' représente un phényle qui a été substitué en position 4 avec un halogène, un alkyle en $C_1$ à $C_4$ ou un alcoxy en $C_1$ à $C_4$,
le 1- ou le 2-napthyle ou
un benzothiazol-2-yle qui a été substitué avec un halogène en position 6 et
R" représente un alkyle en $C_3$ à $C_4$
en une quantité synergiquement efficace.

2. Mélanges fongicides selon la revendication 1, **caractérisé en ce que** les proportions pondérales entre le dérivé d'imidazole Ia et les valinamides II sont comprises entre 20 : 1 et 1 : 20.

3. Procédé de lutte contre les champignons nocifs, **caractérisé en ce que** l'on traite les champignons nocifs, leur

espace vital ou les plantes, semences, sols, surfaces, matériaux ou locaux qui doivent en être débarrassés avec un dérivé d'imidazole de formule Ia selon la revendication 1 et des valinamides de formule II selon la revendication 1.

4. Procédé selon la revendication 3, **caractérisé en ce que** l'on applique le dérivé d'imidazole de formule Ia selon la revendication 1 et les valinamides de formule II selon la revendication 1 simultanément, et ce ensemble ou séparément, ou encore successivement.

5. Procédé selon les revendications 3 ou 4, **caractérisé en ce que** l'on utilise le dérivé d'imidazole de formule Ia selon la revendication 1 en une quantité de 0,01 à 2,5 kg/ha.

6. Procédé selon les revendications 3 à 5, **caractérisé en ce que** l'on utilise les valinamides de formule II selon la revendication 1 en une quantité de 0,01 à 10 kg/ha.

7. Agent fongicide qui est conditionné en deux parties, l'une des parties contenant un dérivé d'imidazole de formule Ia selon la revendication 1 dans un support solide ou liquide et l'autre partie contenant des valinamides de formule II selon la revendication 1 dans un support solide ou liquide.